# EUROPEAN PATENT SPECIFICATION

(11) **EP 4 001 591 B1**
(45) Date of publication and mention of the grant of the patent: **24.07.2024**
(21) Application number: 20207341.7
(22) Date of filing: 13.11.2020
(51) Int. Cl.: F01D 5/20

(54) **TRAILING EDGE TIP COOLING OF BLADE OF A GAS TURBINE BLADE**
KÜHLUNG DER SCHAUFELHINTERKANTENSPITZE EINER GASTURBINENSCHAUFEL
REFROIDISSEMENT DE POINTE DE BORD DE FUITE D'UNE PALE DE TURBINE À GAZ

(43) Date of publication of application: 25.05.2022
(73) Proprietor: Doosan Enerbility Co., Ltd., Seongsan-gu Changwon-si, Gyeongsangnam-do 51711 (KR)
(72) Inventor: KRUECKELS, Joerg, 5400 Baden (CH); BRANDL, Herbert, 5400 Baden (CH); HOFFMANN, Willy H., 5400 Baden (CH); RATHMANN, Ulrich, 5400 Baden (CH)
(74) Representative: Ter Meer Steinmeister & Partner

(56) References cited:
- US-A1- 2003 223 870
- US-A1- 2014 047 842
- US-A1- 2018 223 675
- US-A1- 2018 347 374
- US-A1- 2019 368 359

## Description

### FIELD OF THE INVENTION

The present invention relates to gas turbines, and more particularly to techniques for cooling trailing edge tip of a gas turbine blade.

### BACKGROUND OF THE INVENTION

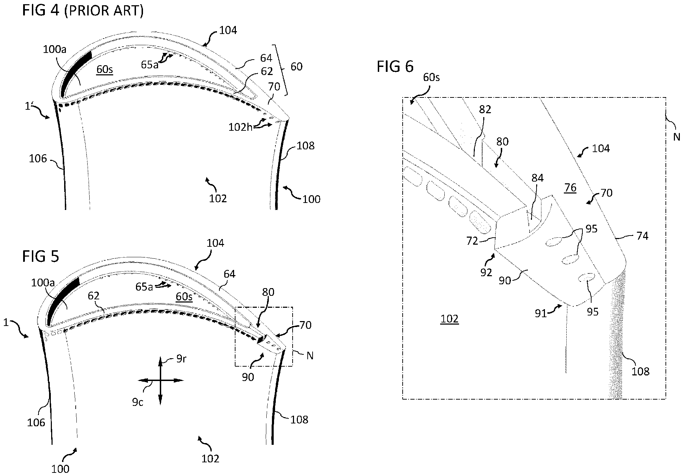

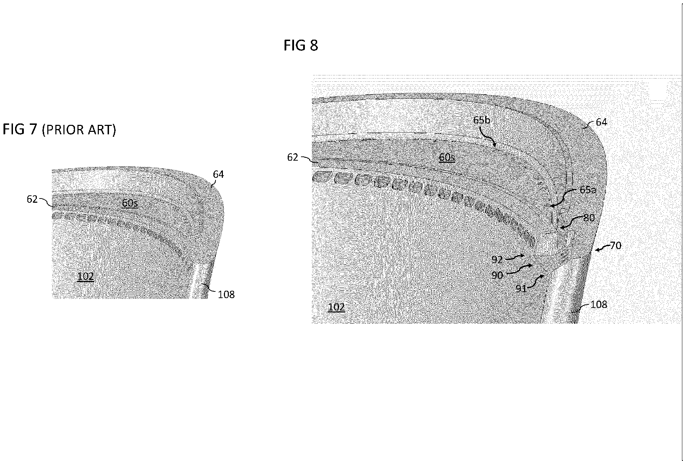

Conventional gas turbine blades 1', as shown in FIGs 4 and 7, include an airfoil 100 extending radially outwards, with respect to a rotation axis of the gas turbine, from a blade platform. The airfoil 100 has pressure and suction sides 102, 104 extending between leading and trailing edges 106, 108 of the airfoil 100. The airfoil 100 also includes an airfoil tip 100a that is disposed at a radially outward end of the airfoil 100. The airfoil tip 100 faces a surface of the stator disposed further radially outwards of the airfoil 100 and which generally defines an outer surface of the hot gases or combustion gases path through the gas turbine. The surface of the stator that the airfoil tip 100a faces may be an inner surface of the casing or an inner surface of a turbine shroud, and so on and so forth.

The airfoil tip 100a is placed spaced apart, i.e. in a non-contact manner, from the facing stator surface. In other words, a radial clearance or gap is included between the airfoil tip 100a of the airfoil 100 and the facing stator surface to avoid chances of collision or rubbing between the airfoil tip 100a of the airfoil 100 and the facing stator surface when the gas turbine is operated. However, parts of the hot gases, i.e. the combustion products, flowing through the hot gas path leak through the radial clearance, instead of flowing over the turbine blade airfoil 100, and thus cause a decrease in efficiency.

Therefore, the radial clearance between the airfoil tip 100a of the airfoil 100 and the facing stator surface is desired to be kept as small as possible to minimize the leakage of the hot gases.

To keep the radial clearance small, and to safeguard the airfoil body from structural damage in an event of accidental contact between the airfoil tip 100a of the airfoil 100 and the facing stator surface during operation of the gas turbine, it is well known in the art of gas turbines to employ a squealer tip structure 60 disposed at the airfoil tip 100a of the airfoil 100 and extending radially outwards towards the facing stator surface.

The squealer tip 60 generally is shaped as a rail positioned at and extending along a periphery of the airfoil tip 100a, for example the squealer tip 60 may have a suction side rail 64 positioned at and extending along a periphery of the suction side 104 at the airfoil tip 100a, and a pressure side rail 62 positioned at and extending along a periphery of the pressure side 102 at the airfoil tip 100a. The suction side rail 64 and the pressure side rail 62 of the squealer tip 60 meet at a trailing edge tip portion 70 of the squealer tip 60.

Since, the squealer tip 60 is bathed in hot combustion products, i.e. the hot gases, a cooling of the squealer tip 60 is desired, particularly at the trailing edge tip portion 70. Generally, cooling holes 102h are placed on the side surfaces of the airfoil 100 i.e. at the pressure side 102 and/or the suction side 104 of the airfoil 100, in the vicinity of the trailing edge tip portion 70. However, such cooling technique known in the conventional art does not provide efficient cooling of the trailing edge tip portion 70 of the squealer tip 60 of the blade 1'.

Therefore, it is an object of the present invention to provide a technique for effectively cooling the trailing edge tip portion of the squealer tip of a gas turbine blade.

US 2018/347374 A1 presents an apparatus and method for cooling an airfoil tip for a turbine engine can include an airfoil, such as a cooled turbine blade, having a tip rail extending beyond a tip wall enclosing an interior for the airfoil at the tip. A plurality of cooling holes can be provided in the tip rail. A flow of cooling fluid can be provided through the cooling holes from the interior of the airfoil to cool the tip of the airfoil. The tip rail circumscribes the airfoil except for a gap defining a tip slot of the tip rail. A support panel having a wedge or rib shape is provided to at least partially enclose the gap. The support panel is secured to the tip at the tip wall proximate the trailing edge along the pressure side. The support panel extends from the tip wall to the tip rail and is secured to the tip rail along the suction side.

US 2003/223870 A1 presents a method for fabricating a rotor blade for a gas turbine engine that facilitates reducing operating temperatures of a tip portion of the rotor blade. The method comprises forming an airfoil including a first sidewall and a second sidewall connected at a leading edge and a trailing edge to define a cavity therein, wherein the first and second sidewalls extend radially between a rotor blade root and a rotor blade tip plate, and forming a first tip wall extending from the rotor blade tip plate along the first sidewall, such that at least a portion of the first tip wall is at least partially recessed with respect to the rotor blade first sidewall to define a tip shelf that extends from the airfoil trailing edge towards the airfoil leading edge. A second tip wall is formed to extend from the rotor blade tip plate along the second sidewall.

US 2014/047842 A1 presents an airfoil for a gas turbine engine that includes pressure and suction walls spaced apart from one another and joined at leading and trailing edges to provide an airfoil that extends in a radial direction. The airfoil has a cooling passage arranged between the pressure and suction walls that extend toward a tip of the airfoil. The tip includes a pocket that separates the pressure and suction walls. Scarfed cooling holes fluidly connect the cooling passage to the pocket. The scarfed cooling holes include a portion that is recessed into a face of the suction wall and exposed to the pocket.

### SUMMARY OF THE INVENTION

The invention is set out by the appended claims.

The above object is achieved by a blade for a gas turbine according to the independent claim appended to the present disclosure. A blade assembly for a gas turbine including the aforementioned blade, and a gas turbine including the aforementioned blade are also presented. Advantageous embodiments of the present technique are provided in dependent claims. Features of independent claim may be combined with features of claims dependent on the independent claim, and features of dependent claims can be combined with each other.

In a first aspect of the present technique a blade for a gas turbine is presented, particularly for a turbine section of the gas turbine. The blade, hereinafter also referred to as the turbine blade, includes an airfoil. The airfoil has an airfoil tip. The airfoil also includes a pressure side and a suction side that meet at a leading edge and a trailing edge and define an internal space together with the airfoil tip. The internal space of the airfoil is also referred to as airfoil cavity.

The blade may also include a platform. From the platform the airfoil may emanate towards a radially outward direction of the blade and a root of the blade may emanate towards an opposite direction, i.e. towards a radially inward direction of the blade. The airfoil tip may be formed as a wall extending between the leading edge, the trailing edge, the pressure side, and the suction side of the airfoil. The airfoil tip may define a radially outward boundary of the airfoil cavity. The airfoil cavity may be present between the airfoil tip or wall and the platform of the blade.

A spanwise direction or a radial direction of the airfoil may be understood as a direction extending between the platform and the airfoil tip. A chordwise direction of the airfoil may be understood as a direction extending between the leading edge and the trailing edge of the airfoil.

The blade also includes a squealer tip. The squealer tip is arranged at the airfoil tip i.e. on a radially outer surface of the airfoil tip. In other words, the squealer tip emanates from the airfoil tip in a radially outward direction of the airfoil. The squealer tip is disposed on the airfoil tip.

The squealer tip comprises a suction side rail or rim or protrusion, a pressure side rail or rim or protrusion, and a trailing edge tip portion or protrusion. The suction side rail corresponds to, i.e. is disposed along or at or is positioned along or at, the suction side of the airfoil. The pressure side rail corresponds to, i.e. is disposed along or at or is positioned along or at, the pressure side of the airfoil. The trailing edge tip portion corresponds to, i.e. is disposed along or at or is positioned along or at, the trailing edge of the airfoil.

The pressure side rail and the suction side rail meet at the trailing edge tip portion. In other words, the pressure side rail and the suction side rail fuse or integrate with each other into a unitary rail or part to form the trailing edge tip portion. The trailing edge tip portion may be understood as a unitary rail or part, at which the pressure side rail and the suction side rail are formed integrally.

The squealer tip may further comprise a leading edge tip portion. The pressure side rail and the suction side rail may meet at the leading edge tip portion that corresponds to, i.e. is disposed along or at or is positioned along or at, the leading edge of the airfoil. Simply put, the squealer tip may comprises the suction side rail, the pressure side rail, the trailing edge tip portion and the leading edge tip portion. The suction side rail and the pressure side rail meet at the trailing edge tip portion corresponding to the trailing edge of the airfoil and meet at the leading edge tip portion corresponding to the leading edge of the airfoil.

The pressure side rail, the suction side rail, the trailing edge tip portion and the airfoil tip together define a squealer tip pocket disposed over or above or on the airfoil tip, i.e. in a radially outward direction.

The pressure side rail, the suction side rail, the trailing edge tip portion and the airfoil tip together may define the squealer tip pocket disposed over or above or on the airfoil tip.

Simply put, the squealer tip encloses or encircles the squealer tip pocket.

At least one tip cooling hole is disposed at or in the squealer tip pocket, and is configured to provide cooling air from the airfoil cavity to the squealer tip pocket i.e. in other words, the at least one tip cooling hole is in fluid communication with the airfoil cavity. An inlet of the at least one tip cooling hole may be positioned at the airfoil cavity to receive cooling air from the airfoil cavity and an outlet of the at least one tip cooling hole may be positioned at the airfoil tip to output or eject or provide cooling air into the squealer tip pocket. In other words, the cooling air may flow from the airfoil cavity into the squealer tip pocket via the at least one tip cooling hole.

The trailing edge tip portion of the squealer tip includes a chamfer and a groove. The chamfer is disposed towards the pressure side of the airfoil. The groove is formed within the trailing edge tip portion. The chamfer is a surface.

The groove extends between the chamfer and the squealer tip pocket and is configured to provide cooling air from the squealer tip pocket to the chamfer. In other words, the groove fluidly connects the squealer tip pocket and the chamfer. The cooling air may flow from the squealer tip pocket into the chamfer via the groove.

An inlet of the groove may be positioned at the squealer tip pocket, and an outlet of the groove may be positioned at the chamfer. The cooling air flowing through the groove provides convective cooling and/or film cooling of the trailing edge tip portion.

The groove may be understood as flow channel for cooling air from the squealer tip pocket to the chamfer. The groove may be formed as an indentation or cavity or recess or notch formed in the trailing edge tip portion, particularly formed in a radially inward direction of the airfoil at a radially outer surface of the trailing edge tip portion of the squealer tip.

Thus, in the blade of the present technique, cooling air from the airfoil cavity flows into the squealer tip pocket via the at least one tip cooling hole, then at least a part of the cooling air from the squealer tip pocket flows from the squealer tip pocket to the chamfer via the groove. The chamfer causes decrease in flow rate of the cooling air over the chamfer thereby improving the cooling of the radially outward part of the blade at the trailing edge. In other words, a cooling air film or layer that is formed over or on the chamfer is more stable and thereby efficient cooling is achieved.

The trailing edge tip portion may comprise a suction side surface corresponding to the suction side of the airfoil and a pressure side surface corresponding to the pressure side of the airfoil and an upper or radially outer surface.

The suction side surface and the pressure side surface are disposed along the radial direction of the airfoil. The radially outer surface or upper surface is disposed to be perpendicular to the radial direction of the airfoil. The suction side surface of the trailing edge tip portion is adjacent to or contiguous with the suction side of the airfoil. The pressure side surface of the trailing edge tip portion is adjacent to or contiguous with the pressure side of the airfoil. The upper or radially outer surface of the trailing edge tip portion extends between the pressure side surface of the trailing edge tip portion and the suction side surface of the trailing edge tip portion. The upper surface or the radially outer surface may be the radially outermost surface of the trailing edge tip portion of the squealer tip of the blade.

The chamfer extends between the upper surface and the pressure side surface of the trailing edge tip portion or between the upper surface of the trailing edge tip portion and the pressure side of the airfoil. In other words, the chamfer is disposed between the upper surface and the pressure side surface of the trailing edge tip portion in a radial direction of the airfoil. Simply put, the chamfer faces the same direction as the pressure side surface of the airfoil.

The chamfer may be a bevel or a beveled edge i.e. the chamfer may extend from radially outer edge of the pressure side of the airfoil up to the upper surface, i.e. an uppermost surface, of the trailing edge tip portion. When formed as a beveled edge, the chamfer provides more surface area.

The groove may extend longitudinally along a camber line of the airfoil. A shape or longitudinal shape of the groove may correspond to the camber line of the airfoil. The shape of the groove may be symmetrical or regular around or about the camber line of the airfoil. The camber line may be understood as a line joining the leading edge and trailing edge of the airfoil equidistant from the suction and the pressure surfaces, also known as mean line and mean camber line.

The chamfer may extend longitudinally along a camber line of the airfoil. A shape or longitudinal shape of the chamfer may correspond to the camber line of the airfoil.

The groove may be disposed between the squealer tip pocket and the chamfer, along a chordwise direction of the airfoil. The groove may be disposed between the squealer tip pocket and the chamfer, along the camber line of the airfoil.

An end or portion, say a first end or first portion, of the chamfer disposed adjacent to or corresponding to the trailing edge of the airfoil, i.e. radially corresponding to the trailing edge of the airfoil or disposed at a first position radially corresponding to the trailing edge of the airfoil, may be referred to as a trailing-edge-side of the chamfer. Another end or portion, say a second end or second portion, of the chamfer disposed adjacent to or corresponding to the groove, i.e. to the outlet of the groove may be referred to as a groove-side of the chamfer. The groove-side of the chamfer is opposite to the trailing-edge-side of the chamfer, in the chordwise direction of the airfoil.

The chamfer is concavely shaped at the groove-side of the chamfer. In other words, the chamfer may have an outline or surface that curves inwards with respect to a radial direction of the airfoil. Simply put, the groove side of the chamfer is formed as curved radially inwards. Only a part of the chamfer is concavely shaped.

The chamfer is planarly or convexly shaped at the trailing-edge-side of the chamfer. In other words, the chamfer has an outline or surface that is formed as a plane or flat surface or that curves outwards with respect to a radial direction of the airfoil. Simply put, the trailing-edge-side of the chamfer is formed as a flat or planar surface or as curved radially outwards. Only a part of the chamfer is planarly or convexly shaped.

According to the invention, the chamfer is concavely shaped at the groove-side of the chamfer and is planarly or convexly shaped at the trailing-edge-side of the chamfer. A shape of the chamfer may be formed as gradually transitioning from concavely shaped at the groove-side of the chamfer to planarly or convexly shaped at the trailing-edge-side of the chamfer. In other words, at the groove-side of the chamfer the topography of the chamfer is concave and at the trailing-edge-side of the chamfer the topography of the chamfer is convex or planar. The topography of the chamfer may change or transition gradually from concave at the groove-side of the chamfer to convex or planar at the trailing-edge-side of the chamfer.

The above-mentioned shape of the chamfer which transitions from concavely shaped at the groove-side to planarly or convexly shaped at the trailing-edge-side is particularly advantageous - compared to other shapes such as where the entire chamfer is convex or concave or planar or where the chamfer shape transitions from one of convex, planar and concave at the groove-side to another of convex, planar and concave at the trailing-edge-side except for the above-mentioned shape (i.e. when the chamfer transitions from concavely shaped at the groove-side to planarly or convexly shaped at the trailing-edge-side) or any other shape - with respect to increase of retention time of the cooling air at the chamfer. Simply put, when the chamfer is shaped as above-mentioned (i.e. when the chamfer transitions from concavely shaped at the groove-side to planarly or convexly shaped at the trailing-edge-side) the cooling air flowing onto the chamfer from the groove and/or from the at least one chamfer-cooling hole (described later) is retained above or stays attached to or at the chamfer surface longer i.e. a more stable film is formed on the chamfer - thereby achieving efficient cooling.

The trailing edge tip portion may include at least one chamfer-cooling hole disposed at the chamfer and configured to provide cooling air from the airfoil cavity to the chamfer. In other words, the at least chamfer-cooling hole is in fluid communication with the airfoil cavity. An inlet of the at least one chamfer-cooling hole may be positioned at the airfoil cavity to receive cooling air from the airfoil cavity and an outlet of the at least one chamfer-cooling hole may be positioned at or in the chamfer to output or eject or provide cooling air to the chamfer. In other words, the cooling air may flow from the airfoil cavity onto the chamfer via the at least one chamfer-cooling hole. The chamfer-cooling holes may be formed as film-cooling holes. The chamfer cooling holes may replenish layer of cooling air on the chamfer.

The trailing edge tip portion may include a plurality of chamfer-cooling holes spaced apart from each other. Thus, a more uniform distribution of the cooling air is obtained or maintained.

The chamfer-cooling holes may be arranged at regular intervals along a chordwise direction of the airfoil or along a camber line of the airfoil. Thus, a more uniform distribution of the cooling air is obtained or maintained along the chordwise direction of the airfoil or along the camber line of the airfoil

The outlet of the groove may be spaced apart from the chamfer along a spanwise direction or radial direction, i.e. in radially outward direction, of the airfoil. Thus, the cooling air film or layer formed over or on the chamfer is minimally disturbed by outflow of the cooling air from the outlet of the groove. In other words, the outflow from the groove contributes to the cooling film on the chamfer, without adversely affecting the cooling film on the chamfer.

The at least one tip cooling hole may include a first tip cooling hole disposed adjacent to the inlet of the groove, i.e. an outlet of the first tip cooling hole disposed adjacent to the inlet of the groove. The first cooling hole, i.e. the outlet of the first cooling hole, may be positioned or disposed within a distance from the inlet of the groove equal to a length of the groove, measured along chordwise direction from the inlet of the groove. Preferably, the first cooling hole, i.e. the outlet of the first cooling hole, may be positioned or disposed within a distance from the inlet of the groove equal to half of the length of the groove, measured along chordwise direction from the inlet of the groove. Thus, the groove, and consequently the chamfer, is readily supplied with cooling air.

A length of the chamfer may be greater than or equal to 0.01 times a chord length of the airfoil, and less than or equal to 0.2 times the chord length of the airfoil, and preferably may be greater than or equal to 0.02 times the chord length of the airfoil and less than or equal to 0.15 times the chord length of the airfoil. This provides an adequately dimensioned chamfer without adversely compromising mechanical strength or integrity of the squealer tip.

A chord may be understood as an imaginary straight line joining the leading edge and the trailing edge of the airfoil. The chord length may be understood as a distance between the leading edge and the trailing edge measured along the chord of the airfoil. The chord length may also be understood as a distance between the trailing edge and the point where the chord intersects the leading edge. The point on the leading edge used to define the chord may be either the surface point of minimum radius or the surface point that maximizes chord length.

Simply put, the chord length is the straight line distance from the leading edge to the trailing edge of the airfoil.

The chamfer may be confined between a first position of the trailing edge tip portion and a second position of the trailing edge tip portion of the squealer tip. The first position may correspond to, i.e. may be aligned in a radial direction of the airfoil with, the trailing edge of the airfoil. The second position may correspond to a distance equal to or less than 0.2 times the chord length of the airfoil from the first position measured along a chord of the airfoil. This provides an adequately positioned chamfer without adversely compromising mechanical strength or integrity of the squealer tip.

The chamfer may be formed contiguous with the first position i.e. the trailing-edge-side of the chamfer may be radially overlap with or may be radially aligned with the trailing edge of the airfoil. Alternatively, the trailing-edge-side of the chamfer may be spaced apart the trailing edge of the airfoil, in the direction towards the leading edge of the airfoil.

The groove may be formed such that a width of the groove may decreases along a spanwise direction of the airfoil i.e. in a radially inward direction of the airfoil. This further facilitates the flow of cooling air from the squealer tip pocket onto the chamfer.

The groove may be formed such that a floor of the groove may be downwardly inclined towards the pressure side of the airfoil. Thus, facilitating a larger amount of air to flow towards the chamfer, which is formed at the pressure side.

A length of the groove may be greater than or equal to 0.01 times a chord length of the airfoil, and less than or equal to 0.20 times the chord length of the airfoil. Preferably, a length of the groove may be is greater than or equal to 0.02 times the chord length of the airfoil and less than or equal to 0.15 times the chord length of the airfoil. The aforementioned dimensions ensure proper or adequate flow of cooling air from the squealer tip pocket onto the chamfer - compared to a longer groove which may offer more resistance to flow of cooling air thereby providing insufficient amount of cooling air to the chamfer or compared to a shorter groove which may provide a stronger flow of cooling air thereby providing disturbing the cooling air layer or film over the chamfer.

The chamfer may be limited or confined within the trailing edge tip portion, i.e. the chamfer may not extend into the suction side rail and/or the pressure side rail of the squealer tip. In other words, the suction side rail and/or the pressure side rail of the squealer tip may be unchamfered.

A length of the groove may be smaller than a length of the chamfer, measured along a chordwise direction.

A second aspect of the present technique presents a turbine blade assembly. The turbine blade assembly includes at least one blade and a rotor disk. The at least one blade is coupled to the rotor disk. The at least one blade is according to the first aspect of the present technique.

A third aspect of the present technique presents a gas turbine including at least one blade. The at least one blade is according to the first aspect of the present technique.

### BRIEF DESCRIPTION OF THE DRAWINGS

The above mentioned attributes and other features and advantages of the present technique and the manner of attaining them will become more apparent and the present technique itself will be better understood by reference to the following description of embodiments of the present technique taken in conjunction with the accompanying drawings, wherein:
FIG. 1 shows a sectional view of a part of an exemplary embodiment of a gas turbine in which an exemplary embodiment of a turbine blade of the present technique may be incorporated;
FIG. 2 schematically illustrates an exemplary embodiment of a turbine blade assembly in which an exemplary embodiment of the turbine blade of the present technique may be incorporated;
FIG. 3 is a vertical cross-sectional view illustrating an exemplary embodiment of the turbine blade;
FIG. 4 schematically depicts a perspective view a part of a conventional airfoil with a conventional squealer tip;
FIG. 5 depicts a perspective view a part of an airfoil of an exemplary embodiment of a blade according to the present technique;
FIG. 6 depicts a perspective view a portion N of FIG. 5;
FIG. 7 schematically depicts another perspective view a part of the conventional airfoil with a conventional squealer tip of FIG. 4;
FIG. 8 depicts another perspective view a part of the airfoil of the blade of FIG 5 according to the present technique;
FIG. 9A schematically depicts exemplary dimension and exemplary location of a chamfer of a trailing edge tip portion of an exemplary embodiment of the blade according to the present technique;
FIG. 9B schematically depicts a cross-sectional view of the chamfer of the trailing edge tip portion along the line C of FIG. 9A;
FIG 9C schematically depicts a cross-sectional view of the chamfer of the trailing edge tip portion along the line V of FIG 9A;
FIG 10 schematically depicts exemplary dimension and exemplary location of a groove of a trailing edge tip portion of an exemplary embodiment of the blade according to the present technique;
FIG 11A schematically depicts a cross-sectional view of an exemplary embodiment of the groove of the trailing edge tip portion along the line G-G' of FIG 10;
FIG 11B schematically depicts a cross-sectional view of another exemplary embodiment of the groove of the trailing edge tip portion along the line G-G' of FIG 10;
FIG 12A schematically depicts a cross-sectional view of yet another exemplary embodiment of the groove of the trailing edge tip portion along the line G-G' of FIG 10; and
FIG 12B schematically depicts exemplary dimensions of the groove of FIG 12A.

Hereinafter, above-mentioned and other features of the present technique are described in detail. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

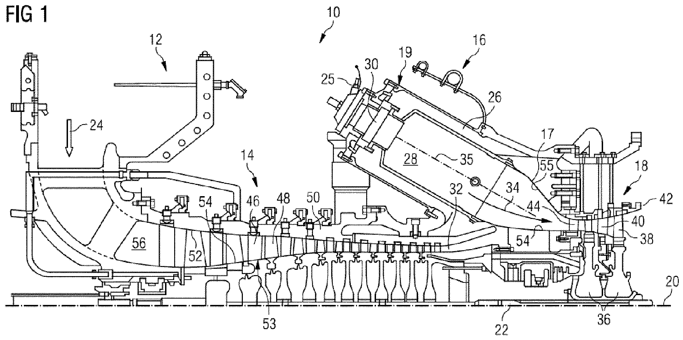

FIG. 1 shows an example of a gas turbine or gas turbine engine 10 in a sectional view. The gas turbine 10 may comprises, in flow series, an inlet 12, a compressor or compressor section 14, a combustor section 16 and a turbine section 18 which are generally arranged in flow series and generally about and in the direction of a longitudinal or rotational axis 20. The gas turbine 10 may further comprises a shaft 22 which is rotatable about the rotational axis 20 and which extends longitudinally through the gas turbine 10. The shaft 22 may drivingly connect the turbine section 18 to the compressor section 14.

In operation of the gas turbine 10, air 24, which is taken in through the air inlet 12 is compressed by the compressor section 14 and delivered to the combustion section or burner section 16. The burner section 16 may comprise a burner plenum 26, one or more combustion chambers 28 and at least one burner 30 fixed to each combustion chamber 28. The combustion chambers 28 and the burners 30 may be located inside the burner plenum 26. The compressed air passing through the compressor 14 may enter a diffuser 32 and may be discharged from the diffuser 32 into the burner plenum 26 from where a portion of the air may enter the burner 30 and is mixed with a gaseous or liquid fuel. The air/fuel mixture is then burned and the combustion gas 34 or working gas from the combustion is channeled through the combustion chamber 28 to the turbine section 18 via a transition duct 17.

This exemplary gas turbine 10 may have a cannular combustor section arrangement 16, which is constituted by an annular array of combustor cans 19 each having the burner 30 and the combustion chamber 28, the transition duct 17 has a generally circular inlet that interfaces with the combustor chamber 28 and an outlet in the form of an annular segment. An annular array of transition duct outlets may form an annulus for channeling the combustion gases to the turbine 18.

The turbine section 18 may comprise a number of blade carrying discs 36 attached to the shaft 22. In the present example, two discs 36 each carry an annular array of turbine blades 38 are depicted. However, the number of blade carrying discs could be different, i.e. only one disc or more than two discs. In addition, guiding vanes 40, which are fixed to a stator 42 of the gas turbine 10, may be disposed between the stages of annular arrays of turbine blades 38. Between the exit of the combustion chamber 28 and the leading turbine blades 38 inlet guiding vanes 44 may be provided and turn the flow of working gas onto the turbine blades 38.

The combustion gas from the combustion chamber 28 enters the turbine section 18 and drives the turbine blades 38 which in turn rotate the shaft 22. The guiding vanes 40, 44 serve to optimize the angle of the combustion or working gas on the turbine blades 38.

The turbine section 18 drives the compressor section 14. The compressor section 14 may comprise an axial series of vane stages 46 and rotor blade stages 48. The rotor blade stages 48 may comprise a rotor disc supporting an annular array of blades. The compressor section 14 may also comprise a casing 50 that surrounds the rotor stages and supports the vane stages 48. The guide vane stages may include an annular array of radially extending vanes that are mounted to the casing 50. The vanes are provided to present gas flow at an optimal angle for the blades at a given engine operational point. Some of the guide vane stages may have variable vanes, where the angle of the vanes, about their own longitudinal axis, can be adjusted for angle according to air flow characteristics that can occur at different engine operations conditions. The casing 50 may define a radially outer surface 52 of the passage 56 of the compressor 14. A radially inner surface 54 of the passage 56 may be at least partly defined by a rotor drum 53 of the rotor which may be partly defined by the annular array of blades 48.

The present technique is described with reference to the above exemplary gas turbine having a single shaft or spool connecting a single, multi-stage compressor and a single, one or more stage turbine. However, it should be appreciated that the present technique is equally applicable to two or three shaft engines and which can be used for industrial, aero or marine applications.

The terms upstream and downstream refer to the flow direction of the airflow and/or working gas flow through the engine unless otherwise stated. The terms forward and rearward refer to the general flow of hot gas through the engine. The terms axial, radial and circumferential are made with reference to the rotational axis 20 of the gas turbine 10.

In the present technique, a turbine blade 1 including an airfoil 100 is presented - as shown for example in FIGs 5, 6 8 - 12B. The turbine blade 1 of the present technique may be the blade 38 of the gas turbine 10, described hereinabove.

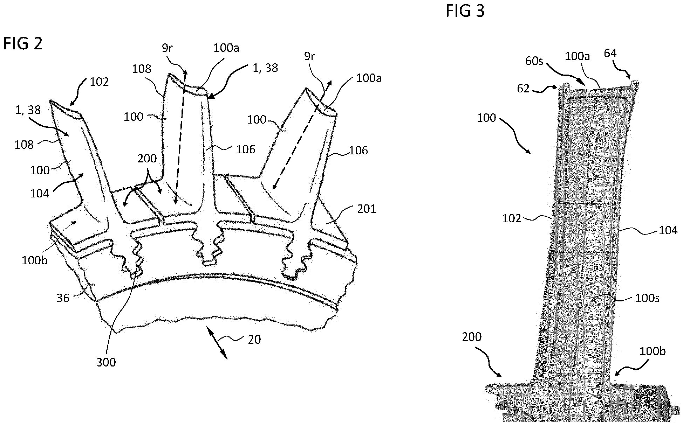

FIG 2 schematically depicts an example of a turbine blade assembly. The assembly may include the turbine blades 38, also referred to as the blade 1 of the present technique, arranged on and coupled to the rotor disk 36. As also shown in FIG 3, the turbine blade 1 may include a platform 200, an airfoil 100 and optionally a root 300. The blade 1 may be fixed to or mounted onto the disk 36 via the root 300.

As shown in FIGs 2 and 3, the turbine blade 1 may include the platform 200 and the airfoil 100 extending from the platform 200. The platform 200 may extend circumferentially. The airfoil 100 extends radially outwards from the platform 200. The root 300 extends radially inwards from the platform 200.

As shown in FIGs 2, 3, 5, 6 and 8, according to the present technique, the airfoil 100 includes a pressure side 102 (also referred to as pressure surface or concave surface/side) and a suction side 104 (also referred to as suction surface or convex surface/side). The pressure side 102 and the suction side 104 meet each other at a leading edge 106 and a trailing edge 108 of the airfoil 100.

The airfoil 100 may have a base part 100b adjoining the platform 200 and a tip part 100a, also referred to as the airfoil tip part or as simply the airfoil tip, spaced apart from the base part 100b along a longitudinal direction or the radial direction 9r of the airfoil 100.

The pressure side 102, the suction side 104, the leading edge 106 and the trailing edge 108 define an internal space or airfoil cavity 100s of the airfoil 100. The airfoil cavity 100s of the airfoil 100 may be limited by the airfoil tip 100a i.e. by a wall of the airfoil tip 100a disposed at the radially outermost end of the airfoil 100.

The airfoil tip 100a may be formed as a wall having an outer surface or radially upper surface and an inner surface or radially inner surface.

The blade 1 includes a squealer tip 60. The squealer tip 60 may be disposed at or on the airfoil tip 100a, particularly emanating radially outwards from the outer surface of the airfoil tip 100a.

Hereinafter, the blade 1 according to the present technique has been explained with reference to the exemplary embodiments depicted in FIG 5, FIG 6, and FIG 8 to FIG 12B. FIGs 4 and 7 represent a conventional blade for comparative understanding of the present technique.

As shown in FIG 5, 6 and 8 the squealer tip 60 may be generally shaped as a rail encircling, continuously or intermittently (not shown), along a periphery of airfoil tip 100a.

The squealer tip 60 includes a suction side rail 64. The suction side rail 64 may be positioned at and extending along a periphery of the suction side 104 at the airfoil tip 100a.

The squealer tip 60 includes a pressure side rail 62. The pressure side rail 62 may be positioned at and extending along a periphery of the pressure side 102 at the airfoil tip 100a.

The squealer tip 60 also includes a trailing edge tip portion 70. The trailing edge tip portion 70 corresponds to, i.e. is disposed along or at or is positioned along or at, the trailing edge 108 of the airfoil 100.

The pressure side rail 62 and the suction side rail 64 meet at the trailing edge tip portion 70. The trailing edge tip portion 70 may be formed as a unitary rail or part or structure which spans or extends between the pressure side 102, the suction side 104 and the trailing edge 108. The trailing edge tip portion 70 does not extend to the leading edge 106 of the airfoil.

The pressure side rail 62, the suction side rail 64, the trailing edge tip portion 70 and the airfoil tip 100a together define a squealer tip pocket 60s disposed over or above or at the airfoil tip 100a, i.e. in a radially outward direction.

A plurality of airfoil tip cooling holes 65a, 65b may be disposed at the squealer tip pocket 60s. The airfoil tip cooling holes 65a, 65b, also referred simply to as tip cooling holes 65a, 65b may be understood as a cooling air flow channel or through-hole formed in the airfoil tip 100a to conduct flow of cooling air from the airfoil cavity 100s (shown in FIG 3) to the squealer tip pocket 60s.

An outlet of the tip cooling hole 65a, 65b may be positioned at the airfoil tip 100a within the squealer tip pocket 60s, and an inlet of the tip cooling hole 65a, 65b may be positioned at the airfoil cavity 100s.

As shown for example in FIG 5, 6 and 8, the trailing edge tip portion 70 of the squealer tip includes a chamfer 90 and a groove 80. The chamfer 90 is disposed towards the pressure side 102 of the airfoil 100.

The groove 80 extends between the chamfer 90 and the squealer tip pocket 60s. At least a part of the cooling air from the squealer tip pocket 60s flows to the chamfer 90 via the groove 80.

An inlet 82 of the groove 80 may be positioned at the squealer tip pocket 60s to receive cooling air from the squealer tip pocket 60s. An outlet 84 of the groove 80 may be positioned at or adjacent to the chamfer 90 such that cooling air exiting from the outlet 84 flows on or over the chamfer 90.

The trailing edge tip portion 70 may include a pressure-side surface 72 corresponding to the pressure side 102 of the airfoil 100, a suction-side surface 74 corresponding to the suction side 104 of the airfoil 100, a side surface facing the squealer tip pocket 60s and extending between the pressure rail 62 and the suction rail 64, and an upper surface 76 which is the radially outer surface of the trailing edge tip portion 70.

As shown in FIGs 5, 6, and 8, the chamfer 90 is disposed between the upper surface 76 and the pressure side surface 72 of the trailing edge tip portion 70 or between the upper surface 72 of the trailing edge tip portion 70 and the pressure side 102 of the airfoil 100.

The groove 84 is formed as a flow channel for cooling air from the squealer tip pocket 60s to the chamfer 90, for example as an indentation or cavity or recess or notch formed in the trailing edge tip portion 70, preferably formed in a radially inward direction, with respect to axis 9r shown in FIG 5, of the airfoil 100 at the radially outer surface 76 or upper surface 76 of the trailing edge tip portion 70 of the squealer tip 70.

The groove 80 may extend longitudinally along a camber line of the airfoil 100, i.e. a shape of the groove 80 may be formed to align with or correspond to the camber line of the airfoil 100. The chamfer 90 may also extend longitudinally along the camber line of the airfoil 100 i.e. a shape of the groove 80 may be formed to align with or correspond to the camber line of the airfoil 100. However, the present technique is not limited to above-mentioned shapes of the groove or the chamfer.

Generally, the groove 80 may be disposed between the squealer tip pocket 60s and the chamfer 90, along a chordwise direction 9c of the airfoil 100 - as exemplarily shown in FIG 5.

As shown in FIG 6, the chamfer 90 may include a first portion or first end disposed adjacent to or corresponding to the trailing edge 108 of the airfoil 100. The first portion may be a position or end or part or portion of the chamfer 90 where the chamfer 90 starts at or adjacent the trailing edge 108 of the airfoil 100. The first portion may be referred to as a trailing-edge-side 91 of the chamfer 90.

As shown in FIG 6, the chamfer 90 may include a second portion or second end disposed adjacent to or corresponding to the groove 80 of the airfoil 100. The second portion may be a position or end or part or portion of the chamfer 90 where the chamfer 90 starts at or adjacent the groove 80 of the airfoil 100. The second portion may be referred to as a groove-side 92 of the chamfer 90. The groove-side 92 of the chamfer 90 is opposite to the trailing-edge-side 91 of the chamfer 90, in the chordwise direction 9c of the airfoil 100.

Along the chordwise direction 9c of the airfoil 100, when moving from the leading edge 106 to the trailing edge 108 of the airfoil 100, the squealer tip pocket 60s, the groove 80 and the chamfer 90 may be serially or sequentially arranged.

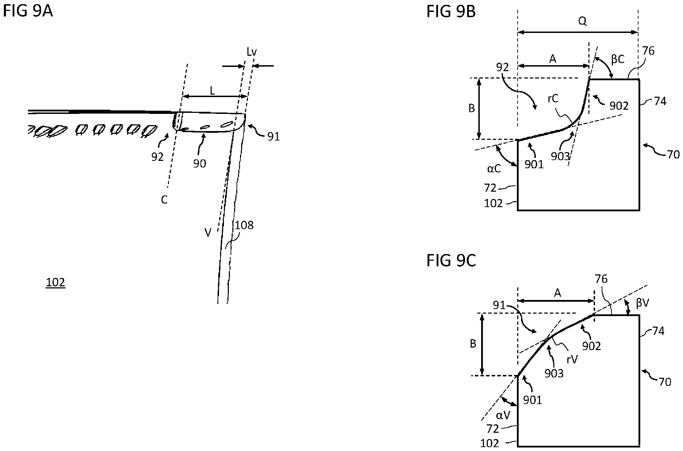

Hereinafter, different embodiments pertaining to shape of the chamfer 90 are explained with reference to FIG 8 and FIGs 9A to 9C.

FIG 9B shows cross-sectional view of the groove-side 92, i.e. at the line C of FIG 9A, when viewed in the chordwise direction 9c from the leading edge 106 towards the trailing edge 108 of the airfoil 100.

As shown in FIG 8 and FIG 9B, the chamfer 90 is concavely shaped at the groove-side 92 of the chamfer 90.

FIG 9C shows cross-sectional view of the trailing-edge-side 91, i.e. at the line V of FIG 9A, when viewed in the chordwise direction 9c from the trailing edge 108 towards the leading edge 106 of the airfoil 100.

As shown in FIG 8 and FIG 9C, the chamfer 90 is convexly shaped at the trailing-edge-side 91 of the chamfer 90. In an embodiment (not shown), entire chamfer 90, i.e. from the groove-side 92 to the trailing-edge-side 91 may be convexly shaped.

Alternatively, the chamfer may be planarly shaped at the trailing-edge-side 91 of the chamfer 90.

In an embodiment, as shown in FIG 8 and FIG 9A to FIG 9C, the chamfer 90 is concavely shaped at the groove-side 92 of the chamfer 90 and is planarly or convexly shaped at the trailing-edge-side 91 of the chamfer 90. The shape of the chamfer 90 may be formed as gradually transitioning from concavely shaped at the groove-side 92 to planarly or convexly shaped at the trailing-edge-side 91 of the chamfer 90.

As shown in FIG 9A, a length L of the chamfer 90 may be greater than or equal to 0.01 times a chord length of the airfoil 100, and less than or equal to 0.2 times the chord length of the airfoil 100. Preferably, the length L of the chamfer 90 may be greater than or equal to 0.02 times the chord length of the airfoil 100 and less than or equal to 0.15 times the chord length of the airfoil 100

As shown in FIG 9A, the chamfer 90 may be confined between a first position of the trailing edge tip portion 70 and a second position of the trailing edge tip portion 70 of the squealer tip 60.

The position at line V in FIG 9A schematically depicts the first position of the trailing edge tip portion 70. In an embodiment (not shown in FIG 9A, but shown in FIG 8), the first position may overlap radially with the trailing edge 108 of the airfoil 100. Alternatively, as shown in FIG 9A, the first position may be spaced apart in the chordwise direction from the trailing edge 108 of the airfoil 100 by a distance Lv. The depiction of FIG 9C is applicable to both embodiments i.e. where the first position overlaps radially with the trailing edge 108 of the airfoil 100 and where the first position is spaced apart in the chordwise direction from the trailing edge 108 by the distance Lv. The distance Lv may be less than or equal to 0.1 times the length L of the chamfer 90 measured along the chordwise direction from the trailing edge 108 of the airfoil 100. The part or portion or end of the chamfer 90 disposed at the first position is the trailing-edge-side 91 of the chamfer 90.

The position at line C in FIG 9A schematically depicts the second position of the trailing edge tip portion 70. The second position may correspond to a distance equal to or less than 0.2 times the chord length of the airfoil 100 from the first position measured along a chord of the airfoil 100. The part or portion or end of the chamfer 90 disposed at the second position is the groove-side 92 of the chamfer 90.

As shown in FIGs 9B and 9C, the chamfer 90 may include a first planar part or portion 901, a second planar part or portion 902 and an intermediate fillet portion 903 between first and second planar portions 901, 902 i.e. the arc shaped portion connecting the first and second planar portions 901, 902. The first planar portion 901, the fillet portion 903 and the second planar portion 902 may be arranged along the radial direction 9r of the airfoil 100. In other words, the fillet portion 903 may be disposed radially outwards, with respect to direction 9r (shown in FIG 5) of the first planar portion 901, and the second planar portion 902 may be disposed radially outwards, with respect to direction 9r (shown in FIG 5) of the fillet portion 903. Such a shape including the first planar portion 901, the fillet portion 903 and the second planar portion 902 is easy to manufacture with precision.

FIGs 9B and 9C show exemplary dimensions of chamfer 90 at the groove-side 92 of the chamfer 90 and at the trailing-edge-side 91 of the chamfer 90, respectively. In FIGs 9B and 9C, reference sign 'A' represents a maximum width of the chamfer 90, reference sign 'B' represents a maximum height/depth of the chamfer 90, and reference sign 'Q' represents a maximum width of trailing edge tip portion 70 at the groove-side 92. The widths A, Q measured along a thickness direction of the airfoil 100, i.e. in a direction extending perpendicularly between the pressure side 102 and the suction side 104 of the airfoil 100 or in other words a direction mutually perpendicular to directions 9r and 9c shown in FIG 5. The height or depth B measured along a radial direction 9r of the airfoil 100.

The width Q of the trailing edge tip portion 70 at the groove-side 92 may be greater than or equal to 0.02 times the chord length, and less than or equal to 0.1 times the chord length.

Generally, the width A of the chamfer 90, i.e. at the groove-side 92 or at the trailing-edge-side or at any position or portion of the chamfer 90 between the groove-side 92 and the trailing-edge-side 91 of the chamfer 90, may be greater than or equal to 0.2 times the width Q of trailing edge tip portion 70 at the groove-side 92.

Generally, the ratio of the height B or depth B and the width A (i.e. the ratio B/A) of the chamfer 90, i.e. at the groove-side 92 or at the trailing-edge-side or at any position or portion of the chamfer 90 between the groove-side 92 and the trailing-edge-side 91 of the chamfer 90, may be greater than or equal to 0.5, and less than or equal to 2.

The width A and/or height B or depth B of the chamfer 90 may be constant, i.e. maybe same from the groove-side 92 to the trailing-edge-side 91 of the chamfer 90.

In an exemplary embodiment, the ratio B/A (height to width) may be constant from groove-side to trailing-edge-side. In explain further, one or both of the width W and height B may remain same or vary, but the ratio B/A (height to width) may be constant from groove-side to trailing-edge-side.

In FIG 9B, reference sign `rC' represents a maximum radius of the fillet portion 903 at groove-side 92 of chamfer 90, and in FIG 9C reference sign `rV' represents a maximum radius of the fillet portion 903 at trailing-edge-side 91 of chamfer 90.

Generally, the radius of the fillet portion 903 of the chamfer 90, i.e. radius rC at the groove-side 92 or radius rV at the trailing-edge-side or radius at any position or portion of the chamfer 90 between the groove-side 92 and the trailing-edge-side 91 of the chamfer 90, may be greater than or equal to 0.005 times the chord length of the airfoil 100, and preferably may be greater than or equal to 0.01 times the chord length of the airfoil 100.

In FIG 9B, reference sign 'αC' represents an angle between the chamfer 90, i.e. particularly the first planar surface 901 of the chamfer 90, and the airfoil pressure side 102 and/or the pressure-side surface 72 of the trailing edge tip portion 70 at the groove-side 92 of the chamfer 90. In FIG 9B, reference sign 'βC' represents an angle between the chamfer 90, i.e. particularly the second planar surface 902 of the chamfer 90, and the upper surface 76 of the trailing edge tip portion 70 at the groove-side 92 of the chamfer 90.

Generally, the angles αC, βC may be between greater than or equal 10° (10 degree) and less than or equal to 85° (85 degree). Preferably, the angles αC, βC may be between greater than or equal 45° (45 degree) and less than or equal to 85° (85 degree).

In FIG 9C, reference sign 'αV' represents an angle between the chamfer 90, i.e. particularly the first planar surface 901 of the chamfer 90, and the airfoil pressure side 102 and/or the pressure-side surface 72 of the trailing edge tip portion 70 at the trailing-edge-side 91 of the chamfer 90. In FIG 9B, reference sign 'βV' represents an angle between the chamfer 90, i.e. particularly the second planar surface 902 of the chamfer 90, and the upper surface 76 of the trailing edge tip portion 70 at the trailing-edge-side 91 of the chamfer 90.

Generally, the angles αV, βV may be between greater than or equal 5° (5 degree) and less than or equal to 85° (85 degree). Preferably, the angles αV, βV may be between greater than or equal 10° (10 degree) and less than or equal to 60° (60 degree), more preferably the angles αV, βV may be between greater than or equal 10° (10 degree) and less than or equal to 45° (45 degree).

Generally, the angles α, β i.e. at any position of the chamfer 90 between the groove-side 92 and the trailing-edge-side 91 may be equal to or less than the angle αC, βC at the groove-side 92 of the airfoil 100, and equal to or greater than the angle αV, βV at the trailing-edge-side 91 of the airfoil 100.

As shown in FIG 5, 6 and 8, the trailing edge tip portion 70 may include at least one chamfer-cooling hole 95 disposed at the chamfer 90. It may be noted that the FIGs depict three chamfer-cooling holes 95 as an example only, and the chamfer 90 may be without any chamfer-cooling hole 95, or may have one or two or four or more chamfer-cooling holes 95.

The chamfer cooling hole 95 provide cooling air from the airfoil cavity 100s (shown in FIG 3) to the chamfer 90.

The trailing edge tip portion 90 may include a plurality of chamfer-cooling holes 95 spaced apart from each other. The chamfer-cooling holes 95 may be arranged at regular intervals along the chordwise direction 9c of the airfoil 100 or along the camber line of the airfoil 100.

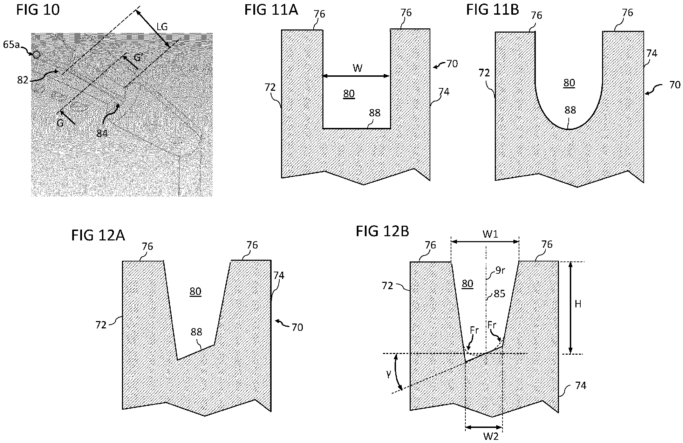

Referring to FIG 6, the outlet 84 of the groove 80 may be spaced apart from the chamfer 90 along a spanwise direction or radial direction 9r, i.e. a floor 88 (shown in FIGs 11A - 12B) may be disposed radially outward of the chamfer 90.

Hereinafter, different embodiments pertaining to shape of the groove 80 are explained with reference to FIGs 10 to 12B.

FIGs 11A to 12B show cross-sectional views of the groove 80, i.e. at the line G-G' of FIG 10, when viewed in the chordwise direction 9c from the trailing edge 108 towards the leading edge 106 of the airfoil 100.

As shown in FIG 10, the at least one tip cooling hole 65a, 65b may include a first tip cooling hole 65a disposed adjacent to the inlet 82 of the groove 80. The first cooling hole 65a may be positioned or disposed within a distance from the inlet 82 of the groove 84 equal to a length LG of the groove 80, measured along chordwise direction 9c from the inlet 82 of the groove 80. Preferably, the first cooling hole 65a may be positioned or disposed within a distance from the inlet 82 of the groove 84 equal to half of the length LG of the groove 80.

FIGs 11A, 11B and 12A, show different exemplary embodiments of the groove 80. However, it may be noted, that the shape of the groove 80 is not limited to the shapes shown in FIGs 11A - 12A i.e. the groove 80 may have a cross-sectional shape different than the shapes depicted in the examples of FIGs 11A, 11B and 12A.

Generally, the groove 80 may include side walls facing each other and a floor 88 forming the base or bottom surface of the groove 80. The floor 80 may be planar as shown in FIGs 11A and 12A or may be curved or rounded as shown in FIG 11B. The planar shaped floor 88 may be horizontally disposed i.e. along the thickness direction of the airfoil 100, as shown in FIG 11A; or may be inclined with respect to the pressure side 102 or the pressure-side surface 72, as shown in FIG 12B. Preferably, the planar shaped floor 88 may be downwardly inclined towards the pressure side 102 or the pressure-side surface 72, as shown in FIG 12B.

As shown in FIG 11A, the groove 80 may be formed such that a width W of the groove 80, i.e. a separation distance between the side walls facing each other, may be constant or remain unchanged along a spanwise direction of the airfoil 100 i.e. along the radially inward direction 9r of the airfoil 100. This ensures increased volume or amount of cooling air to flow to the chamfer 90.

Alternatively, as shown in FIGs 11B, 12A and 12B, the groove 80 may be formed such that a width W of the groove 80, i.e. a separation distance between the side walls facing each other, may decrease along a spanwise direction of the airfoil 100 i.e. along the radially inward direction 9r of the airfoil 100. For example, the width W1 at an opening of the groove 80 formed at the upper surface 76 may be greater than a width W2 at the floor 88 of the groove 80.

As shown in FIG 10, the length LG of the groove 80 may be greater than or equal to 0.01 times a chord length of the airfoil 100, and less than or equal to 0.20 times the chord length of the airfoil 100. Preferably, the length LG of the groove 80 may be is greater than or equal to 0.02 times the chord length of the airfoil 100 and less than or equal to 0.15 times the chord length of the airfoil 100.

In FIG 12B, reference sign 'H' represents a height or depth of the groove 80, measured along the radial direction 9r of the airfoil from the upper surface 76 of the trailing edge tip portion 70 of the squealer tip 60.

The maximum width W1 of the groove 80, i.e. width W1 at the opening of the groove 80 formed at the upper surface 76 may be less than or equal to the maximum width A of the chamfer 90.

The maximum width W1 of the groove 80 may be greater than or equal to 0.5 mm (millimeter).

The maximum width W1 of the groove 80 may be greater than or equal to 0.5 mm (millimeter), and less than or equal to the maximum width A of the chamfer 90.

The maximum depth H or height H of the groove 80 may be less than or equal to the maximum depth or height B of the chamfer 90.

The maximum depth H or height H of the groove 80 may be greater than or equal to 0.5 mm (millimeter).

The maximum depth H or height H of the groove 80 may be greater than or equal to 0.5 mm (millimeter), and less than or equal to the maximum depth B or height B of the chamfer 90.

The depth H or height H of the groove 80 may be constant from the inlet 82 to the outlet 84 of the groove 80. When the floor 88 is inclined or when the floor 88 is non-planar or curved the depth H or height H of the groove 80 may be a mean depth H or height H of the groove 80.

In FIG 12B, reference sign 'γ' represents an angle of inclination of the floor 88 of the groove 80, with respect to the thickness direction of the airfoil 100.

The angle γ may be greater than or equal to 0° (0 degree), and less than or equal to 75° (75 degree).

The angle γ of the floor 88 of the groove 80 may be constant from the inlet 82 to the outlet 84 of the groove 80.

The side walls and the floor 88 of the groove 80 may be filleted i.e. may be connected by an arc-shaped edge, as depicted by dotted line Fr in FIG 12B.

A radius of the filleted part between the side walls and the floor 88 of the groove 80 may be greater than or equal to 0.1 mm, and less than or equal to half of W2 i.e. a minimum width W2 of the groove 80 or a width W2 at the floor 88 of the groove 80.

The scope of the invention is indicated by the following claims.

**LIST OF REFERENCE SIGNS**

| | | | |
|---|---|---|---|
| 1 | blade | 16 | combustor section or burner section |
| 9r | radial direction of the airfoil | 17 | transition duct |
| 9c | chordwise direction of the airfoil | 18 | turbine section |
| 10 | gas turbine | 19 | combustor cans |
| 12 | inlet | 20 | longitudinal or rotational axis |
| 14 | compressor section | 22 | shaft |
| 24 | air | 48 | rotor blade stages |
| 26 | burner plenum | 50 | casing |
| 28 | combustion chamber | 52 | radially outer surface |
| 30 | burner | 53 | rotor drum |
| 32 | diffuser | 54 | radially inner surface |
| 34 | combustion gas or working gas | 56 | passage |
| 36 | blade carrying discs | 60 | squealer tip |
| 38 | turbine blades | 60s | squealer tip pocket |
| 40 | guiding vanes | 62 | pressure side rail |
| 42 | stator | 64 | suction side rail |
| 42a | inner surface of the stator | 65a, 65b | tip cooling hole |
| 44 | inlet guiding vanes | 70 | trailing edge tip portion |
| 46 | vane stages | | |
| 72 | pressure-side surface of trailing edge tip portion | | |
| 74 | suction-side surface of trailing edge tip portion | | |
| 76 | upper surface of the trailing edge tip portion | | |
| 80 | groove | LG | length of the groove |
| 82 | inlet of the groove | Lv | distance of the first position from the trailing edge |
| 84 | outlet of the groove | | |
| 85 | axis of the groove | rC | radius of the fillet portion at groove-side of chamfer |
| 88 | floor of the groove | | |
| 90 | chamfer | rV | radius of the fillet portion at trailing-edge-side |
| 901 | first planar portion | | |
| 902 | second planar portion | V | first position of the trailing edge tip portion |
| 903 | fillet portion between first and second planar portions | | |
| | | W, W 1, W2 | width of the groove |
| 91 | trailing-edge-side of the chamfer | αC | angle between airfoil pressure side and chamfer at groove-side of the chamfer |
| 92 | groove-side of the chamfer | | |
| 95 | chamfer-cooling hole | βC | angle between upper surface of trail-ing edge tip portion and chamfer at groove-side of the chamfer |
| 100 | airfoil | | |
| 100a | airfoil tip | | |
| 100b | airfoil base | αV | angle between airfoil pressure side and chamfer at trailing-edge-side of the chamfer |
| 100s | airfoil cavity | | |
| 102 | pressure surface/side | | |
| 102h | pressure side cooling hole | βV | angle between upper surface of trail-ing edge tip portion and chamfer at trailing-edge-side of the chamfer |
| 104 | suction surface/side | | |
| 106 | leading edge | | |
| 108 | trailing edge | γ | angle of inclination of the floor of the groove |
| A | width of the chamfer | | |
| B | height/depth of the chamfer | | |
| C | second position of the trailing edge tip portion | | |
| H | height/depth of the groove | | |
| Q | width of trailing edge tip portion at groove-side | | |
| L | length of the chamfer | | |

## Claims

1. A blade (1) for a gas turbine (10), the blade (1) comprising:
- an airfoil (100) having an airfoil tip (100a), and a pressure side (102) and a suction side (104) meeting at a leading edge (106) and a trailing edge (108) and defining an airfoil cavity (100s) therein;
- a squealer tip (60) arranged at the airfoil tip (100a), wherein the squealer tip (60) comprises a trailing edge tip portion (70) disposed at the trailing edge (108) of the airfoil (100) and a pressure side rail (62) and a suction side rail (64) meeting at the trailing edge tip portion (70) and defining a squealer tip pocket (60s) at the airfoil tip (100a); and
- at least one tip cooling hole (65a, 65b) disposed at the squealer tip pocket (60s) and configured to provide cooling air from the airfoil cavity (100s) to the squealer tip pocket (60s); wherein the trailing edge tip portion (70) of the squealer tip (60) comprises:
- a chamfer (90) disposed towards the pressure side (102) of the airfoil (100); and
- a groove (80) extending from the squealer tip pocket (60s) to the chamfer (90) and configured to provide cooling air from the squealer tip pocket (60s) to the chamfer (90),
**characterized in that** the chamfer (90) is concavely shaped at a groove-side (92) of the chamfer (90), and the chamfer (90) is planarly or convexly shape at a trailing-edge-side (91) of the chamfer (90).

2. The blade (1) according to claim 1, wherein the groove (80) and/or the chamfer (90) extends longitudinally along a camber line (100c) of the airfoil (100).

3. The blade (1) according to any one of the preceding claims, wherein a shape of the chamfer (90) gradually transitions from concavely shaped at the groove-side (92) of the chamfer (90) to planarly or convexly shaped at the trailing-edge-side (91) of the chamfer (90).

4. The blade (1) according to any one of the preceding claims, wherein the trailing edge tip portion (70) comprises at least one chamfer-cooling hole (95) disposed at the chamfer (90) and configured to provide cooling air from the airfoil cavity (100s) to the chamfer (90).

5. The blade (1) according to claim 4,
wherein the trailing edge tip portion (70) comprises a plurality of chamfer-cooling holes (95) spaced apart from each other; and/or
wherein the trailing edge tip portion (70) comprises a plurality of chamfer-cooling holes (95) arranged at regular interval.

6. The blade (1) according to any one of the preceding claims, wherein an outlet (84) of the groove (80) is spaced apart from the chamfer (90) along a radially outward direction (9r) of the airfoil (100).

7. The blade (1) according to any one of the preceding claims, the at least one tip cooling hole (65a, 65b) comprises a first tip cooling hole (65a) disposed adjacent to an inlet (82) of the groove (80).

8. The blade (1) according to any one of the preceding claims, wherein a length (L) of the chamfer (90) is greater than or equal to 0.01 times a chord length of the airfoil (100), and less than or equal to 0.2 times the chord length of the airfoil (100), and preferably is greater than or equal to 0.02 times the chord length of the airfoil (100) and less than or equal to 0.15 times the chord length of the airfoil (100).

9. The blade (1) according to any one of the preceding claims, wherein the chamfer (90) is confined between a first position of the trailing edge tip portion (70) corresponding to the trailing edge (108) of the airfoil (100) and a second position of the trailing edge tip portion (70) at a distance equal to or less than 0.2 times the chord length of the airfoil (100) from the first position measured along a chord of the airfoil (100).

10. The blade (1) according to any one of the preceding claims,
wherein a width (W) of the groove (80) decreases along a radially inward direction of direction of the airfoil (100); and/or
wherein a floor (88) of the groove (80) is downwardly inclined towards the pressure side (102) of the airfoil (100).

11. The blade (1) according to any one of the preceding claims, wherein a length (LG) of the groove (80) is greater than or equal to 0.01 times a chord length of the airfoil (100), and less than or equal to 0.2 times the chord length of the airfoil (100), and preferably is greater than or equal to 0.02 times the chord length of the airfoil (100) and less than or equal to 0.15 times the chord length of the airfoil (100).

12. The blade (1) according to any one of the preceding claims, wherein a length (LG) of the groove (80) is smaller than a length (L) of the chamfer (90).

13. A turbine blade assembly comprising:
- at least one blade (1) according to any one of the preceding claims; and
- a rotor disk (36), and wherein the at least one blade (1) is coupled to the rotor disk (36).

14. A gas turbine (10) comprising at least one blade (1) according to any one of claims 1 to 12.

## Patentansprüche

1. Schaufel (1) für eine Gasturbine (10), wobei die Schaufel (1) Folgendes umfasst:
- ein Strömungsprofil (100), das eine Strömungsprofilspitze (110a), eine Druckseite (102) und eine Saugseite (104), die sich an einer Vorderkante (106) und einer Hinterkante (108) treffen und darin einen Strömungsprofilhohlraum (100s) bilden, aufweist;
- eine Anstreifkante (60), die an der Strömungsprofil spitze (110a) angeordnet ist, wobei die Anstreifkante (60) einen Hinterkanten-Spitzenabschnitt (70), der an der Hinterkante (108) des Strömungsprofils (100) angeordnet ist, eine Druckseitenschiene (62) und eine Saugseitenschiene (64), die sich an dem Hinterkanten-Spitzenabschnitt (70) treffen und an der Strömungsprofilspitze (110a) eine Anstreifkantenaussparung (60s) definieren, umfasst; und
- mindestens ein Kantenkühlloch (65a, 65b), das an der Anstreifkantenaussparung (60s) angeordnet ist und konfiguriert ist, für die Anstreifkantenaussparung (60s) Kühlluft von dem Strömungsprofilhohlraum (100s) bereitzustellen;
wobei der Hinterkanten-Spitzenabschnitt (70) der Anstreifkante (60) Folgendes umfasst:
- eine Fase (90), die in Richtung der Druckseite (102) des Strömungsprofils (100) angeordnet ist; und
- eine Nut (80), der sich von der Anstreifkantenaussparung (60s) zu der Fase (90) erstreckt und konfiguriert ist, für die Fase (90) Kühlluft von der Anstreifkantenaussparung (60s) bereitzustellen,
**dadurch gekennzeichnet, dass** die Fase (90) an einer Nutseite (92) der Fase (90) konkav geformt ist und die Fase (90) an einer Hinterkantenseite (91) der Fase (90) planar oder konvex geformt ist.

2. Schaufel (1) nach Anspruch 1, wobei sich die Nut (80) und/oder die Fase (90) entlang einer Wölbungslinie (100c) des Strömungsprofils (100) in Längsrichtung erstrecken.

3. Schaufel (1) nach einem der vorhergehenden Ansprüche, wobei eine Form der Fase (90) kontinuierlich von der konkaven Form auf der Nutseite (92) der Fase (90) zu der planaren oder konvexen Form an der Hinterkantenseite (91) der Fase (90) übergeht.

4. Schaufel (1) nach einem der vorhergehenden Ansprüche, wobei der Hinterkanten-Spitzenabschnitt (70) mindestens ein Fasenkühlloch (95) umfasst, das an der Fase (90) angeordnet ist und konfiguriert ist, für die Fase (90) Kühlluft von dem Strömungsprofilhohlraum (100s) bereitzustellen.

5. Schaufel (1) nach Anspruch 4,
wobei der Hinterkanten-Spitzenabschnitt (70) mehrere Fasenkühllöcher (95) umfasst, die voneinander beabstandet sind; und/oder
wobei der Hinterkanten-Spitzenabschnitt (70) mehrere Fasenkühllöcher (95) umfasst, die in regelmäßigen Abständen angeordnet sind.

6. Schaufel (1) nach einem der vorhergehenden Ansprüche, wobei ein Auslass (84) der Nut (80) von der Fase (90) entlang einer radialen Richtung nach außen beabstandet ist.

7. Schaufel (1) nach einem der vorhergehenden Ansprüche, wobei das mindestens ein Kantenkühlloch (65a, 65b) ein ersten Kantenkühlloch (65a) umfasst, das neben einem Einlass (82) der Nut (80) angeordnet ist.

8. Schaufel (1) nach einem der vorhergehenden Ansprüche, wobei eine Länge (L) der Fase (90) größer oder gleich der 0,01-fachen Sehnenlänge des Strömungsprofils (100) und kleiner oder gleich der 0,2-fachen Sehnenlänge des Strömungsprofils (100) ist und vorzugsweise größer oder gleich der 0,02-fachen Sehnenlänge des Strömungsprofils (100) und kleiner oder gleich der 0,15-fachen Sehnenlänge des Strömungsprofils (100) ist.

9. Schaufel (1) nach einem der vorhergehenden Ansprüche, wobei die Fase (90) zwischen einer ersten Position des Hinterkanten-Spitzenabschnitts (70), die der Hinterkante (108) des Strömungsprofils (100) entspricht, und einer zweiten Position des Hinterkanten-Spitzenabschnitts (70), die in einer Entfernung, die kleiner oder gleich dem 0,2-Fachen der Sehnenlänge des Strömungsprofils (100) ist, von der ersten Position entlang einer Sehne des Strömungsprofils (100) gemessen wird, begrenzt ist.

10. Schaufel (1) nach einem der vorhergehenden Ansprüche,
wobei eine Breite (W) der Nut (80) entlang einer radial nach innen gerichteten Richtung des Strömungsprofils (100) abnimmt; und/oder
wobei ein Boden (88) der Nut (80) in Richtung der Druckseite (102) des Strömungsprofils (100) nach unten geneigt ist.

11. Schaufel (1) nach einem der vorhergehenden Ansprüche, wobei eine Länge (LG) der Nut (80) größer oder gleich der 0,01-fachen Sehnenlänge des Strömungsprofils (100) und kleiner oder gleich der 0,2-fachen Sehnenlänge des Strömungsprofils (100) ist und vorzugsweise größer oder gleich der 0,02-fachen Sehnenlänge des Strömungsprofils (100) und kleiner oder gleich der 0,15-fachen Sehnenlänge des Strömungsprofils (100) ist.

12. Schaufel (1) nach einem der vorhergehenden Ansprüche, wobei eine Länge (LG) der Nut (80) kleiner als eine Länge (L) der Fase (90) ist.

13. Turbinenschaufelanordnung, die Folgendes umfasst:
- mindestens eine Schaufel (1) nach einem der vorhergehenden Ansprüche; und
- eine Rotorscheibe (36), wobei die mindestens eine Schaufel (1) an die Rotorscheibe (36) gekoppelt ist.

14. Gasturbine (10), die mindestens eine Schaufel (1) nach einem der Ansprüche 1 bis 12 umfasst.

## Revendications

1. Aube (1) pour une turbine à gaz (10), l'aube (1) comportant :
- un profil (100) ayant un bout de profil (100a), et un intrados (102) et un extrados (104) se rejoignant au niveau d'un bord d'attaque (106) et d'un bord de fuite (108) et définissant une cavité de profil (100s) dans celui-ci ;
- un bout aminci (60) agencé sur le bout de profil (100a), dans laquelle le bout aminci (60) comporte une partie de bout de bord de fuite (70) disposée sur le bord de fuite (108) du profil (100) et un rail d'intrados (62) et un rail d'extrados (64) se rejoignant au niveau de la partie de bout de bord de fuite (70) et définissant une poche de bout aminci (60s) sur le bout de profil (100a) ; et
- au moins un trou de refroidissement de bout (65a, 65b) disposé sur la poche de bout aminci (60s) et configuré pour fournir de l'air de refroidissement de la cavité de profil (100s) à la poche de bout aminci (60s) ;
dans laquelle la partie de bout de bord de fuite (70) du bout aminci (60) comporte :
- un chanfrein (90) disposé vers l'intrados (102) du profil (100) ; et
- une rainure (80) s'étendant de la poche de bout aminci (60s) au chanfrein (90) et configurée pour fournir de l'air de refroidissement de la poche de bout aminci (60s) au chanfrein (90),
**caractérisée en ce que** le chanfrein (90) est formé de manière concave sur un côté rainure (92) du chanfrein (90) et le chanfrein (90) est formé de manière plane ou convexe sur un côté bord de fuite (91) du chanfrein (90).

2. Aube (1) selon la revendication 1, dans laquelle la rainure (80) et/ou le chanfrein (90) s'étend longitudinalement le long d'une ligne de cambrure (100c) du profil (100).

3. Aube (1) selon l'une quelconque des revendications précédentes, dans laquelle une forme du chanfrein (90) passe graduellement d'une forme concave sur le côté rainure (92) du chanfrein (90) à une forme plane ou convexe sur le côté bord de fuite (91) du chanfrein (90).

4. Aube (1) selon l'une quelconque des revendications précédentes, dans laquelle la partie de bout de bord de fuite (70) comporte au moins un trou de refroidissement de chanfrein (95) disposé sur le chanfrein (90) et configuré pour fournir de l'air de refroidissement de la cavité de profil (100s) au chanfrein (90).

5. Aube (1) selon la revendication 4,
dans laquelle la partie de bout de bord de fuite (70) comporte une pluralité de trous de refroidissement de chanfrein (95) espacés les uns des autres ; et/ou
dans laquelle la partie de bout de bord de fuite (70) comporte une pluralité de trous de refroidissement de chanfrein (95) disposés à intervalle régulier.

6. Aube (1) selon l'une quelconque des revendications précédentes, dans laquelle une sortie (84) de la rainure (80) est espacée du chanfrein (90) le long d'une direction radialement vers l'extérieur (9r) du profil (100).

7. Aube (1) selon l'une quelconque des revendications précédentes, dans laquelle le au moins un trou de refroidissement de bout (65a, 65b) comporte un premier trou de refroidissement de bout (65a) disposé au voisinage d'une entrée (82) de la rainure (80).

8. Aube (1) selon l'une quelconque des revendications précédentes, dans laquelle une longueur (L) du chanfrein (90) est supérieure ou égale à 0,01 fois une longueur de corde du profil (100), et inférieure ou égale à 0,2 fois la longueur de corde du profil (100), et est de préférence supérieure ou égale à 0,02 fois la longueur de corde du profil (100) et inférieure ou égale à 0,15 fois la longueur de corde du profil (100).

9. Aube (1) selon l'une quelconque des revendications précédentes, dans laquelle le chanfrein (90) est confiné entre une première position de la partie de bout de bord de fuite (70) correspondant au bord de fuite (108) du profil (100) et une seconde position de la partie de bout de bord de fuite (70) à une distance égale ou inférieure à 0,2 fois la longueur de corde du profil (100) par rapport à la première position mesurée le long d'une corde du profil (100).

10. Aube (1) selon l'une quelconque des revendications précédentes,
dans laquelle une largeur (W) de la rainure (80) diminue le long d'une direction radialement vers l'intérieur d'une direction du profil (100) ; et/ou
dans laquelle un fond (88) de la rainure (80) est incliné vers le bas vers l'intrados (102) du profil (100).

11. Aube (1) selon l'une quelconque des revendications précédentes, dans laquelle une longueur (LG) de la rainure (80) est supérieure ou égale à 0,01 fois une longueur de corde du profil (100), et inférieure ou égale à 0,2 fois la longueur de corde du profil (100), et est de préférence supérieure ou égale à 0,02 fois la longueur de corde du profil (100) et inférieure ou égale à 0,15 fois la longueur de corde du profil (100).

12. Aube (1) selon l'une quelconque des revendications précédentes, dans laquelle une longueur (LG) de la rainure (80) est inférieure à une longueur (L) du chanfrein (90).

13. Ensemble d'aube de turbine comportant :
- au moins une aube (1) selon l'une quelconque des revendications précédentes ; et
- un disque de rotor (36), et dans lequel la au moins une aube (1) est couplée au disque de rotor (36).

14. Turbine à gaz (10) comportant au moins une aube (1) selon l'une quelconque des revendications 1 à 12.
